# EUROPEAN PATENT APPLICATION

(11) **EP 4 507 342 A1**
(43) Date of publication of application: **12.02.2025**
(21) Application number: 23802607.4
(22) Date of filing: 20.04.2023
(51) Int. Cl.: H04W 4/16

(54) **METHOD FOR PLAYING AND PROVIDING INCOMING CALL RINGTONE, AND TERMINAL, SERVER AND MEDIUM**

(30) Priority: 09.05.2022 CN 202210498555
(71) Applicant: ZTE Corporation, Shenzhen, Guangdong 518057 (CN)
(72) Inventor: YANG, Haicheng, Shenzhen, Guangdong 518057 (CN); ZHOU, Jinxing, Shenzhen, Guangdong 518057 (CN)
(74) Representative: Canzler & Bergmeier Patentanwälte Partnerschaft mbB
(86) International application number: PCT/CN2023/089488
(87) International publication number: WO 2023/216832

(57) **Abstract**

Provided in the present disclosure is a method for playing an incoming call ringtone, which method is applied to a terminal. The method comprises: receiving a call request that requires a calling ringtone, wherein the call request that requires the calling ringtone requests the terminal to download the calling ringtone from a server and play the calling ringtone; when the terminal is configured to reject the calling ringtone, refusing to download audio of the calling ringtone from the server, and playing audio of a local ringtone; and when the terminal is configured to allow the calling ringtone, downloading the calling ringtone from the server, and playing the calling ringtone. Further provided in the present disclosure are a method for providing an incoming call ringtone, and a terminal, a server and a computer-readable medium.

## Description

### CROSS REFERENCE TO RELATED APPLICATIONS

The present disclosure claims the priority to Chinese Patent Application No. 202210498555.8 filed with the CNIPA on May 9, 2022, the contents of which are incorporated herein by reference in their entirety.

### TECHNICAL FIELD

The present disclosure relates to, but is not limited to, the field of calling ringtone technology.

### BACKGROUND

A customized ringtone service (or a customized video ringtone service) is a personalized service customized by a user. When a terminal of the user who customizes the customized ringtone service calls another terminal, instead of playing a local ringtone originally set by the called terminal, the called terminal plays a video and an audio (a calling ringtone) which are set in advance by the calling user.

In this way, when the called terminal receives a call request of the customized ringtone service, the called terminal plays the calling ringtone, but since an owner (the user) of the called terminal may not be familiar with the audio of the calling ringtone, the owner may not be aware that his own terminal is ringing after hearing the calling ringtone, and thus miss the call.

### SUMMARY

The present disclosure provides a method for playing an incoming call ringtone, a method for providing an incoming call ringtone, a terminal, a server, and a computer readable medium.

In a first aspect, the present disclosure provides a method for playing an incoming call ringtone which is applied to a terminal, including: receiving a call request which requests a calling ringtone, with the call request which requests the calling ringtone requesting the terminal to download the calling ringtone from a server and play the calling ringtone; in a case where the terminal is configured to reject the calling ringtone, refusing to download an audio of the calling ringtone from the server, and playing an audio of a local ringtone; and in case where the terminal is configured to allow the calling ringtone, downloading the calling ringtone from the server, and playing the calling ringtone.

In a second aspect, the present disclosure provides a method for providing an incoming call ringtone which is applied to a server, including: determining existence of a call request which requests a calling ringtone for a terminal, with the call request which requests the calling ringtone requesting the terminal to download the calling ringtone from the server and play the calling ringtone; in a case where it is determined that the terminal is configured to reject the calling ringtone, refusing to send an audio of the calling ringtone to the terminal; and in case where it is determined that the terminal is configured to allow the calling ringtone, sending the calling ringtone to the terminal.

In a third aspect, the present disclosure provides a terminal, including one or more storage devices and one or more processors; and the one or more storage devices store a computer program executable by the one or more processors, and when executed by the one or more processors, the computer program implements the method for playing an incoming call ringtone according to any one of implementations of the present disclosure.

In a fourth aspect, the present disclosure provides a server, including one or more storage devices and one or more processors; and the one or more storage devices store a computer program executable by the one or more processors, and when executed by the one or more processors, the computer program implements the method for providing an incoming call ringtone according to any one of the implementations of the present disclosure.

In a fifth aspect, the present disclosure provides a computer readable medium having stored thereon a computer program which, when executed by a processor, implements the method for playing an incoming call ringtone according to any one of the implementations of the present disclosure, or implements the method for providing an incoming call ringtone according to any one of the implementations of the present disclosure.

### BRIEF DESCRIPTION OF DRAWINGS

In the drawings of the present disclosure:
FIG. 1 is a flowchart illustrating a method for playing an incoming call ringtone according to the present disclosure;
FIG. 2 is another flowchart illustrating a method for playing an incoming call ringtone according to the present disclosure;
FIG. 3 is a flowchart illustrating a method for providing an incoming call ringtone according to the present disclosure;
FIG. 4 is another flowchart illustrating a method for providing an incoming call ringtone according to the present disclosure;
FIG. 5 is a block diagram of a terminal according to the present disclosure;
FIG. 6 is a block diagram of a server according to the present disclosure;
FIG. 7 is a block diagram of a computer readable medium according to the present disclosure;
FIG. 8 is a block diagram of a terminal capable of implementing a method for playing an incoming call ringtone according to the present disclosure; and
FIG. 9 is a schematic diagram illustrating a logic process of a method for playing an incoming call ringtone according to the present disclosure.

### DETAIL DESCRIPTION OF EMBODIMENTS

In order to enable those of ordinary skill in the art to better understand the technical solutions of the present disclosure, a method for playing an incoming call ringtone, a method for providing an incoming call ringtone, a terminal, a server, and a computer readable medium provided in the implementations of the present disclosure are described in detail below with reference to the drawings.

The present disclosure will be described more fully below with reference to the drawings, but the implementations illustrated may be embodied in different forms, and the present disclosure should not be interpreted as being limited to the implementations described below. Rather, the implementations are provided to make the present disclosure thorough and complete, and are intended to enable those of ordinary skill in the art to fully understand the scope of the present disclosure.

The drawings for the implementations of the present disclosure are intended to provide a further understanding of the implementations of the present disclosure and constitute a part of the specification. Together with the specific implementations of the present disclosure, the drawings are used to explain the present disclosure, but do not constitute any limitation to the present disclosure. The above and other features and advantages will become more apparent to those of ordinary skill in the art from the description of the specific implementations with reference to the drawings.

The present disclosure can be described with reference to plans and/or cross-sectional views with the aid of idealized schematic diagrams of the present disclosure. Accordingly, the exemplary drawings may be modified according to manufacturing techniques and/or tolerances.

All the implementations of the present disclosure and the features therein may be combined with each other if no conflict is incurred.

The terms used herein are merely used to describe the specific implementations, and are not intended to limit the present disclosure. The term "and/or" used herein includes any and all combinations of one or more associated listed items. The terms "one" and "the" used herein which indicate a singular form are intended to include a plural form, unless expressly stated in the context. The terms "include" and "be made of" used herein indicate the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein

The present disclosure is not limited to the implementations illustrated by the drawings, but includes modifications to configuration formed based on a manufacturing process. Thus, regions shown in the drawings are illustrative, and shapes of the regions shown in the drawings illustrate specific shapes of regions of elements, but are not intended to make limitations.

In a first aspect, the present disclosure provides a method for playing an incoming call ringtone, which is applied to a terminal.

The method for playing an incoming call ringtone according to the present disclosure is performed by the terminal (called terminal), that is, when receiving an incoming call, the terminal determines how to play a ringtone with the method according to the present disclosure, so as to inform a user of the incoming call.

The terminal may be any electronic device capable of making a call, such as a mobile phone, a tablet computer, a notebook computer, or a smart watch.

For the incoming call, when the terminal receives a call request, if the user chooses to answer the incoming call, a call may be established between the calling terminal and the called terminal. The call may be a voice call (merely transmitting voice) or a video call (simultaneously transmitting an audio and a video). For example, the call may be an incoming call (i.e., a "normal call") based on IP Multimedia Subsystem (IMS), such as Voice over New Radio (VoNR or Vo5G), Voice over Long Term Evolution (VoLTE), or Voice over WiFi (VoWiFi or WFC,); or, the call may be a voice call or a video call based on data transmitted by specific software, which will not be described in detail here.

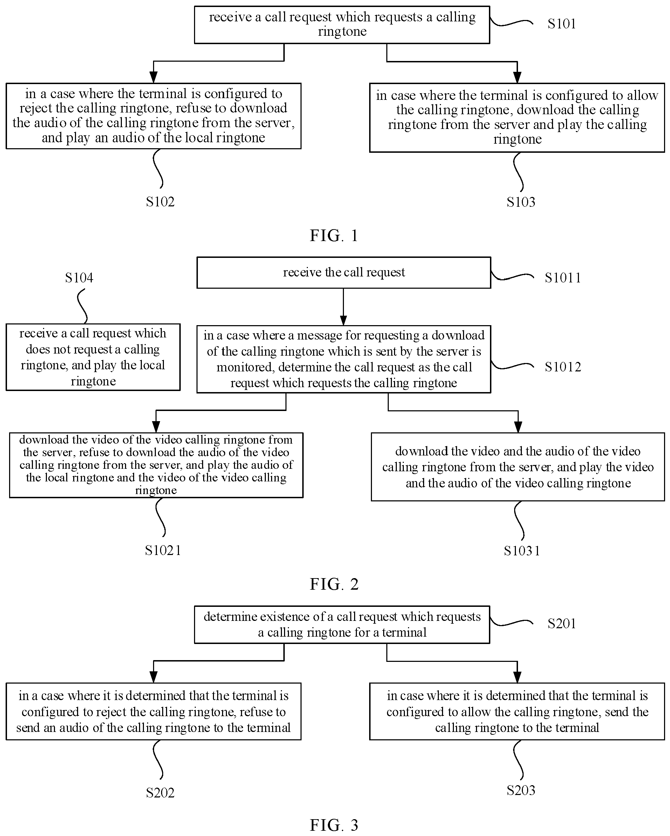

Referring to FIG. 1, the method for playing an incoming call ringtone according to the present disclosure may include S101 to S103.

S101, receiving a call request which requests a calling ringtone.

The call request which requests the calling ringtone requests the terminal to download the calling ringtone from a server and play the calling ringtone.

The terminal (called terminal) receives the call request initiated by a calling terminal, and the call request requests the calling ringtone.

The calling ringtone refers to that, if a terminal subscribes to a calling ringtone service, when the terminal makes a call to another terminal as a calling terminal, the called terminal which receives the call is requested to download an audio (an audio of the calling ringtone) specified by the calling terminal from a server (such as a customized ringtone platform and/or a coloring ringtone platform) and play the audio of the calling ringtone as a ringtone, so as to inform an owner (user) of the called terminal of the incoming call, that is, the called terminal plays the calling ringtone set by the calling terminal instead of a local ringtone originally set by the called terminal.

For example, the calling ringtone may include a video calling ringtone (customized ringtone, or customized video ringtone), an audio calling ringtone (coloring ringtone), and the like.

S102, in a case where the terminal is configured to reject the calling ringtone, refusing to download the audio of the calling ringtone from the server, and playing an audio of the local ringtone.

S103, in case where the terminal is configured to allow the calling ringtone, downloading the calling ringtone from the server and playing the calling ringtone.

After receiving the call request which requests the calling ringtone, the terminal makes a decision based on a current local configuration of the terminal.
(1) If the current local configuration of the terminal is "reject calling ringtone" (representing a desire to not play the calling ringtone), the terminal does not actually download the audio of the calling ringtone from the server, but plays the audio of the local ringtone (that is, what is sent out by the terminal is the sound of the audio of the local ringtone) even though the terminal "is supposed to" download the calling ringtone from the server and play the calling ringtone according to the call request.
(2) If the current local configuration of the terminal is "allow calling ringtone" (representing a desire to play the calling ringtone), the terminal downloads the calling ringtone from the server and plays the calling ringtone (that is, what is actually sent out by the terminal is the sound of the audio of the calling ringtone).

The "local ringtone" refers to a ringtone which is currently set by the terminal to be played in response to a call, and may be a ringtone set locally by the terminal or a default ringtone of the terminal.

It should be understood that it is also feasible that the terminal is configured to use different local ringtones for different situations (e.g., for different types of incoming calls or for incoming calls from different users).

It should be understood that operation S102 and operation S103 are different operations separately performed in different cases, and the numbering order of operation S102 and operation S103 does not represent a necessary execution order of the two operations.

Illustratively, in some related technologies, after receiving a call (receiving a call request), a terminal may monitor a media negotiation update (Update) message from a customized ringtone platform, and check whether the message carries a field of *P-Early-Media: sendrecv.*
(1) If the message carries the field of *P-Early-Media: sendrecv,* it is determined that the call request requests a calling ringtone, so that the terminal receives audio and video media streams from the customized ringtone platform, and plays the downloaded audio and video (that is, playing the calling ringtone).
(2) If the message does not carry the field of *P-Early-Media: sendrecv* (or a 183/180 message carrying a field of *P-Early-Media: inactive,* which is sent by the customized ringtone platform, is received while the terminal is waiting to receive the media streams), it is determined that the call request does not request the calling ringtone, so that the terminal plays the local ordinary ringtone directly.

As can be seen, in some related technologies, the called terminal determines the ringtone to be played merely according to whether the call request requests the calling ringtone (such as whether the call request carries a specific field), such that the called terminal necessarily plays the calling ringtone in response to the call request which requests the calling ringtone.

However, the owner (user) of the called terminal may not be familiar with the audio of the calling ringtone, such that the owner may not be aware that his own terminal is ringing after hearing the audio of the calling ringtone, and thus miss the call.

In the implementations of the present disclosure, when the called terminal receives the call request which requests the calling ringtone (such as customized ringtone), the called terminal may interact with the server (such as the customized ringtone platform) in different ways according to the different local configurations, so that the terminal may download the calling ringtone from the server and play the calling ringtone merely when the terminal is configured to desire to play the calling ringtone (allowing the calling ringtone), and does not download the audio of the calling ringtone but plays the audio of the local ringtone when the terminal is configured to not desire to play the calling ringtone (rej ecting the calling ringtone). Thus, if the terminal plays the audio of the calling ringtone, the user is necessarily aware that the terminal may possibly send out the sound of other ringtones, so that the user will not miss calls. If the user does not want to hear the sound of the other ringtones, what is sent out by the terminal is necessarily the local ringtone set by the user himself, which may also prevent the user from missing the calls.

Referring to FIG. 2, in some implementations, in a case where the calling ringtone is the video calling ringtone (including a video and an audio), refusing to download the audio of the calling ringtone from the server and playing the audio of the local ringtone (S102) includes: S1021, downloading the video of the video calling ringtone from the server, refusing to download the audio of the video calling ringtone from the server, and playing the audio of the local ringtone and the video of the video calling ringtone; and downloading the calling ringtone from the server and playing the calling ringtone (S103) includes: S1031, downloading the video and the audio of the video calling ringtone from the server, and playing the video and the audio of the video calling ringtone.

The video calling ringtone (such as customized ringtone) includes two parts, i.e., the video and the audio. That is, when the video calling ringtone is played according to the related technology, the terminal sends out the sound of the audio of the video calling ringtone and simultaneously displays images of the video of the video calling ringtone.

In the implementations of the present disclosure, in the case where the calling ringtone is the video calling ringtone, if the terminal is configured to reject the calling ringtone, the terminal may still download the video of the video calling ringtone from the server and play the video of the video calling ringtone, but at the same time, the terminal does not download the audio of the video calling ringtone and just plays the audio of the local ringtone. That is, the terminal sends out the sound of the audio of the local ringtone, but simultaneously displays the images of the video of the video calling ringtone. If the terminal is configured to allow the calling ringtone, the terminal simultaneously downloads the video and the audio of the video calling ringtone from the server, and simultaneously plays the video and the audio.

Apparently, when the user does not watch the terminal, the user makes a judgment on the incoming call mainly according to the sound sent out by the terminal; but after the user watches the terminal, the judgment on the incoming call is not affected by the video played by the terminal. Therefore, for the video calling ringtone, in a case of not desiring to play the calling ringtone, the video of the video calling ringtone may be downloaded and played while playing the audio of the local ringtone to attract the attention of the user, so as to maintain the personalized service of the calling ringtone as much as possible.

It should be understood that, for the video calling ringtone, in the case of not desiring to play the calling ringtone, downloading the video of the video calling ringtone may be also rejected, so the video of the video calling ringtone is not played. Since the local ringtone may also include a video and an audio, the video of the local ringtone may be played while playing the audio of the local ringtone, or the video of the video calling ringtone may be played while playing the audio of the local ringtone. For a calling ringtone (such as a coloring ringtone) which includes an audio alone, the problem of whether to download a video does not exist.

In some implementations, receiving the call request which requests the calling ringtone (S101) includes: S1011, receiving the call request; and S1012, in a case where a message for requesting a download of the calling ringtone which is sent by the server is monitored, determining the call request as the call request which requests the calling ringtone.

Referring to FIG. 2, after receiving the call request, whether the message for requesting the download of the calling ringtone is received may be monitored (for example, monitoring whether the media negotiation update message sent by the customized ringtone platform carries the field of *P-Early-Media: sendrecv),* and whether the call request requests the calling ringtone may be accordingly determined.

In some implementations, refusing to download the audio of the calling ringtone from the server (S102) includes: sending a message for rejecting a download of the calling ringtone to the server.

Downloading the calling ringtone from the server (S103) includes: sending a message for requesting a download of the calling ringtone to the server, and downloading the calling ringtone from the server.

In an implementation of the present disclosure, the terminal may send a message for rejecting the download of the calling ringtone (e.g., the filed of *P-Early-Media: inactive* or a message indicating that an audio media line port is closed) or the message for requesting the download of the calling ringtone (e.g., the field of *P-Early-Media: sendrecv*) to the server according to the local configurations, so as to inform the server of whether to provide the download of the audio of the calling ringtone.

It should be understood that, for the video calling ringtone, the message for rejecting the download of the calling ringtone sent by the terminal may indicate that a download of the audio of the video calling ringtone is rejected while a download of the video of the video calling ringtone is requested.

It should be understood that the messages sent by the terminal to the server may be in various formats which will not be described in detail here.

Referring to FIG. 2, in some implementations, the method further includes: S104, receiving a call request which does not request a calling ringtone, and playing the local ringtone.

In an implementation of the present disclosure, when the terminal receives a conventional call request which does not request a calling ringtone, the local ringtone is directly played.

In a second aspect, the present disclosure provides a method for providing an incoming call ringtone, which is applied to a server.

The method for providing an incoming call ringtone according to the present disclosure is performed by the server (such as a customized ringtone platform or a coloring ringtone platform), that is, the server cooperates with a terminal (called terminal) to enable the terminal to implement the method for playing an incoming call ringtone according to the present disclosure.

Referring to FIG. 3, the method for providing an incoming call ringtone according to the present disclosure includes S201 to S203.

S201, determining existence of a call request which requests a calling ringtone for a terminal.

The call request which requests the calling ringtone requests the terminal to download the calling ringtone from the server and play the calling ringtone.

S202, in a case where it is determined that the terminal is configured to reject the calling ringtone, refusing to send an audio of the calling ringtone to the terminal.

S203, in case where it is determined that the terminal is configured to allow the calling ringtone, sending the calling ringtone to the terminal.

In the present disclosure, after the server determines the existence of the call request which requests the calling ringtone for a certain terminal, the server (such as a customized ringtone platform and a coloring ringtone platform) rejects a download of the audio of the calling ringtone by the terminal or provides the download of the calling ringtone for the terminal according to whether the terminal is configured to reject the calling ringtone or allow the calling ringtone (for example, according to a message for rejecting the download of the calling ringtone or a message for requesting the download of the calling ringtone which is sent by the terminal).

It should be understood that operation S202 and operation S203 are different operations separately performed in different cases, and the numbering order of operation S202 and operation S203 does not represent a necessary execution order of the two operations.

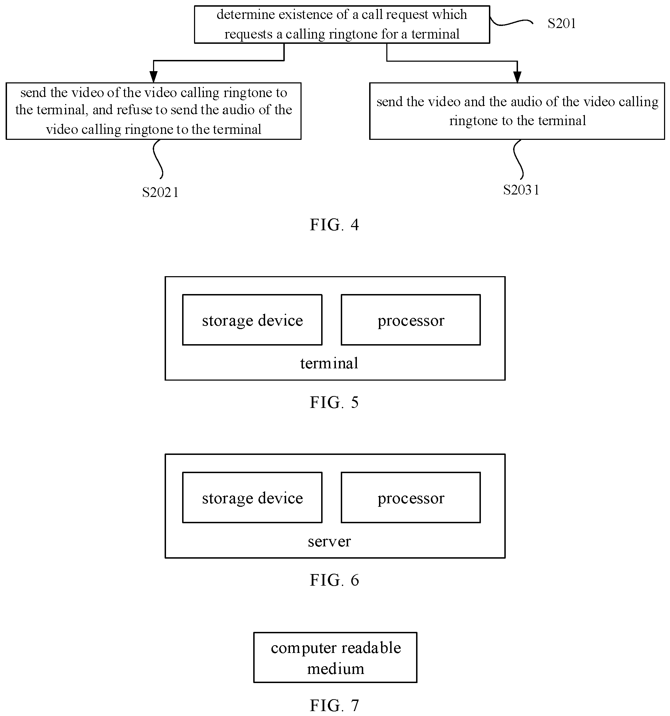

Referring to FIG. 4, in some implementations, in a case where the calling ringtone is a video calling ringtone (including a video and an audio), refusing to send the audio of the calling ringtone to the terminal (S202) includes: S2021, sending the video of the video calling ringtone to the terminal, and refusing to send the audio of the video calling ringtone to the terminal; and sending the calling ringtone to the terminal (S203) includes: S2031, sending the video and the audio of the video calling ringtone to the terminal.

In the case where the calling ringtone is the video calling ringtone, if the terminal is configured to reject the calling ringtone, a download of the video of the video calling ringtone may be still provided for the terminal to allow the terminal to play, but the terminal is not allowed to download the audio of the video calling ringtone, so that the terminal may play an audio of a local ringtone; and if the terminal is configured to allow the calling ringtone, the terminal may be allowed to download and play the video and the audio of the video calling ringtone.

It should be understood that, in the case where the calling ringtone is the video calling ringtone, if the terminal is configured to reject the calling ringtone, the terminal may be not allowed to download the video and the audio of the video calling ringtone, so that the terminal may play the local ringtone totally.

In some implementations, in a case where it is determined that the terminal is configured to reject the calling ringtone, refusing to send the audio of the calling ringtone to the terminal (S202) includes: in a case of receiving, from the terminal, a message for rejecting a download of the calling ringtone, refusing to send the audio of the calling ringtone to the terminal.

In a case where it is determined that the terminal is configured to allow the calling ringtone, sending the calling ringtone to the terminal (S203) includes: in a case of receiving, from the terminal, a message for requesting a download of the calling ringtone, sending the calling ringtone to the terminal.

In an implementation of the present disclosure, the server may determine whether the terminal is configured to reject the calling ringtone or allow the calling ringtone according to the message for rejecting the download of the calling ringtone or the message for requesting the download of the calling ringtone which is sent by the terminal, and then determine whether to allow the terminal to download the audio of the calling ringtone.

In a third aspect, referring to FIG. 5, the present disclosure provides a terminal, including one or more storage devices and one or more processors; and the storage devices store a computer program executable by the one or more processors. When executed by the one or more processors, the computer program may implement the method for playing an incoming call ringtone according to any one of the implementations of the present disclosure.

An implementation of the present disclosure provides a terminal (called terminal) capable of implementing the above method for playing an incoming call ringtone, such as a mobile phone, a tablet computer, a notebook computer, or a smart watch.

In a fourth aspect, referring to FIG. 6, the present disclosure provides a server, including one or more storage devices and one or more processors; and the storage devices store a computer program executable by the one or more processors. When executed by the one or more processors, the computer program may implement the method for providing an incoming call ringtone according to any one of the implementations of the present disclosure.

An implementation of the present disclosure provides a server capable of implementing the above method for providing an incoming call ringtone, such as a customized ringtone platform or a coloring ringtone platform.

In the implementations of the present disclosure, the processor is a device having data processing capability, and includes, but is not limited to, a Central Processing Unit (CPU); the storage device is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and an input/output (I/O) interface (read/write interface) is connected between the processor and the storage device, may enable the information interaction between the storage device and the processor, and includes, but is not limited to, a data bus (Bus).

In a fifth aspect, referring to FIG. 7, the present disclosure provides a computer readable medium having stored thereon a computer program which, when executed by a processor, implements the method for playing an incoming call ringtone according to any one of the implementations of the present disclosure, or implements the method for providing an incoming call ringtone according to any one of the implementations of the present disclosure.

An exemplary description is given below for a whole process of performing, by the terminal, the method for playing an incoming call ringtone according to the implementations of the present disclosure.

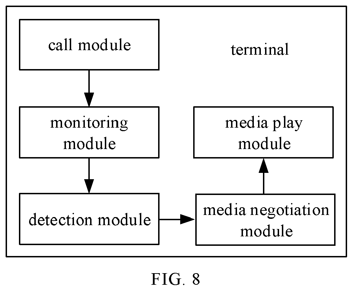

Referring to FIG. 8, the terminal according to the present disclosure may be divided into a call module, a monitoring module, a detection module, a media negotiation module, and a media play module.

The call module is configured to establish, maintain, and hang up a call (after receiving the call request).

The monitoring module is configured to monitor whether the media negotiation update message sent by the customized ringtone platform (server) is received, and determine whether the message for requesting the download of the calling ringtone (e.g., the field of *P-Early-Media: sendrecv*) is carried, so as to determine whether the call request requests the calling ringtone.

The detection module is configured to detect, in response to the call request which requests the calling ringtone, whether the current configuration of the terminal is to desire to play the calling ringtone (allowing the calling ringtone) or is to not desire to play the calling ringtone (rejecting the calling ringtone).

Certainly, the detection module needs to provide some means for the user to configure the terminal to allow the calling ringtone or reject the calling ringtone, such as providing a corresponding configuration interaction window.

The media negotiation module is configured to negotiate, according to a determination result of the detection module, with the customized ringtone platform for playing of audio/video media streams (calling ringtone), so as to download the media streams.

The media play module is configured to play the incoming call ringtone (e.g., the local ringtone or the downloaded calling ringtone).

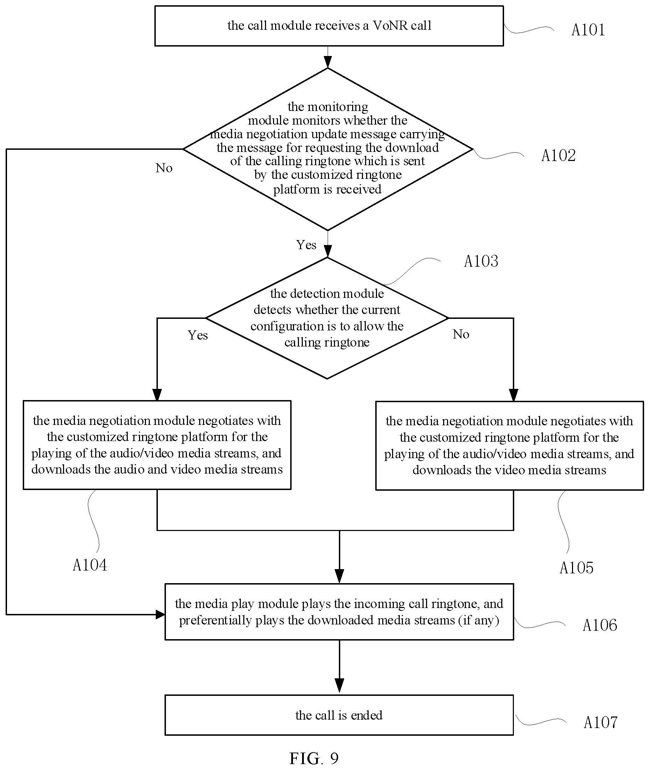

Referring to FIG. 9, a process of the method for playing an incoming call ringtone provided in the present disclosure may include A101 to A107.

At A101, the call module receives a VoNR call.

At A102, the monitoring module monitors whether the media negotiation update message carrying the message for requesting the download of the calling ringtone which is sent by the customized ringtone platform is received.

If the media negotiation update message carrying the message for requesting the download of the calling ringtone which is sent by the customized ringtone platform is received, operation A103 is performed; and if the media negotiation update message carrying the message for requesting the download of the calling ringtone which is sent by the customized ringtone platform is not received, operation A106 is performed.

At A103, the detection module detects whether the current configuration is to allow the calling ringtone.

If the current configuration is to allow the calling ringtone, operation A104 is performed; and if the current configuration is not to allow the calling ringtone, operation A105 is performed.

At A104, the media negotiation module negotiates with the customized ringtone platform for the playing of the audio/video media streams, and downloads the audio and video media streams.

At A105, the media negotiation module negotiates with the customized ringtone platform for the playing of the audio/video media streams, and downloads the video media streams.

At A106, the media play module plays the incoming call ringtone, and preferentially plays the downloaded media streams (if any).

At A107, the call is ended.

Various formats may be adopted for the messages for the negotiation between the media negotiation module and the customized ringtone platform for the playing of the audio/video media streams, and are illustrated below by examples.

### Example One:

In a case of not desiring to play the calling ringtone, the media negotiation module may modify a directional attribute of the audio media streams from *sendrecv* (send and receive) to *sendonly* (only send) or *inactive* (disable) in a message for replying to the media negotiation update message, so as to inform the customized ringtone platform to not send the audio media streams.

For example, a part of the replied negotiation message which is about the audio media streams may include:
P-Early-Media: sendrecv
m=audio 50010 RTP/AVP 104 116
a=inactive

The above content indicates that the audio media streams do not need to be transmitted.

### Example Two:

In a case of not desiring to play the calling ringtone, the media negotiation module may set a port address for reception of the audio media streams to be 0 in a message for replying to the media negotiation update message, so as to inform the customized ringtone platform that the terminal does not receive the audio media streams.

For example, a part of the replied negotiation message which is about the audio media streams may include:
P-Early-Media: sendrecv
m=audio 0 RTP/AVP 104 116
a=sendrecv

The above content indicates that a port for receiving the audio media streams does not actually exist.

### Example Three:

According to the RFC5009 standard, values of the P-Early-Media (PEM) field may include *sendrecv, sendonly, recvonly* (only receive), *gate, inactive,* and *supported* (support).

A new PEM value may be specified for realizing the negotiation for the playing of the audio/video media streams. For example, a value *audio* and a value *video* may be newly added to indicate a need to transmit an audio and a need to transmit a video, respectively.

For example, a part of the replied negotiation message which is about the audio media streams may include:
P-Early-Media: sendrecv, video

The above content indicates that merely the video streams need to be transmitted, that is, the audio streams do not need to be transmitted.

It should be understood by those of ordinary skill in the art that the functional modules/units in all or some of the operations, systems and devices disclosed above may be implemented as software, firmware, hardware, or suitable combinations thereof.

If implemented as hardware, the division between the functional modules/units stated above is not necessarily corresponding to the division of physical components; and for example, one physical component may have a plurality of functions, or one function or operation may be performed through cooperation of several physical components.

Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM (more specifically, an SDRAM, a DDR, etc.), an ROM, an EEPROM, a flash memory or other magnetic disks, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses exemplary implementations using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular implementation can be used alone or in combination with features, characteristics and/or elements described in connection with other implementations. Therefore, it should be understood by those of ordinary skill in the art that various changes in the forms and the details can be made without departing from the scope of the present disclosure of the appended claims.

## Claims

1. A method for playing an incoming call ringtone which is applied to a terminal, comprising:
receiving a call request which requests a calling ringtone; the call request which requests the calling ringtone requesting the terminal to download the calling ringtone from a server and play the calling ringtone;
in a case where the terminal is configured to reject the calling ringtone, refusing to download an audio of the calling ringtone from the server, and playing an audio of a local ringtone; and
in case where the terminal is configured to allow the calling ringtone, downloading the calling ringtone from the server, and playing the calling ringtone.

2. The method of claim 1, wherein the calling ringtone is a video calling ringtone, which comprises a video and an audio;
refusing to download the audio of the calling ringtone from the server and playing the audio of the local ringtone comprises: downloading the video of the video calling ringtone from the server, refusing to download the audio of the video calling ringtone from the server, and playing the audio of the local ringtone and the video of the video calling ringtone; and
downloading the calling ringtone from the server and playing the calling ringtone comprises: downloading the video and the audio of the video calling ringtone from the server, and playing the video and the audio of the video calling ringtone.

3. The method of claim 1, wherein receiving the call request which requests the calling ringtone comprises:
receiving a call request; and
in a case where a message for requesting a download of the calling ringtone which is sent by the server is monitored, determining the call request as the call request which requests the calling ringtone.

4. The method of claim 1, wherein
refusing to download the audio of the calling ringtone from the server comprises: sending a message for rejecting a download of the calling ringtone to the server; and
downloading the calling ringtone from the server comprises: sending a message for requesting a download of the calling ringtone to the server, and downloading the calling ringtone from the server.

5. The method of claim 1, further comprising:
receiving a call request which does not request a calling ringtone, and playing the local ringtone.

6. A method for providing an incoming call ringtone which is applied to a server, comprising:
determining existence of a call request which requests a calling ringtone for a terminal; the call request which requests the calling ringtone requesting the terminal to download the calling ringtone from the server and play the calling ringtone;
in a case where it is determined that the terminal is configured to reject the calling ringtone, refusing to send an audio of the calling ringtone to the terminal; and
in case where it is determined that the terminal is configured to allow the calling ringtone, sending the calling ringtone to the terminal.

7. The method of claim 6, wherein the calling ringtone is a video calling ringtone, which comprises a video and an audio;
refusing to send the audio of the calling ringtone to the terminal comprises: sending the video of the video calling ringtone to the terminal, and refusing to send the audio of the video calling ringtone to the terminal; and
sending the calling ringtone to the terminal comprises: sending the video and the audio of the video calling ringtone to the terminal.

8. The method of claim 6, wherein
in a case where it is determined that the terminal is configured to reject the calling ringtone, refusing to send the audio of the calling ringtone to the terminal comprises: in a case of receiving, from the terminal, a message for rejecting a download of the calling ringtone, refusing to send the audio of the calling ringtone to the terminal; and
in a case where it is determined that the terminal is configured to allow the calling ringtone, sending the calling ringtone to the terminal comprises: in a case of receiving, from the terminal, a message for requesting the download of the calling ringtone, sending the calling ringtone to the terminal.

9. A terminal, comprising one or more storage devices and one or more processors; wherein the one or more storage devices store a computer program executable by the one or more processors, and when executed by the one or more processors, the computer program implements the method for playing an incoming call ringtone of any one of claims 1 to 5.

10. A server, comprising one or more storage devices and one or more processors; wherein the one or more storage devices store a computer program executable by the one or more processors, and when executed by the one or more processors, the computer program implements the method for providing an incoming call ringtone of any one of claims 6 to 8.

11. A computer readable medium having stored thereon a computer program which, when executed by a processor, implements the method for playing an incoming call ringtone of any one of claims 1 to 5, or implements the method for providing an incoming call ringtone of any one of claims 6 to 8.
